# FASCICULE DE BREVET EUROPEEN

(11) **EP 3 698 022 B1**
(45) Date de publication et mention de la délivrance du brevet: **21.06.2023**
(21) Numéro de dépôt: 18796734.4
(22) Date de dépôt: 15.10.2018
(51) Int. Cl.: F01D 11/24, F02C 6/08, F02C 7/18

(54) **TURBOMACHINE D'AÉRONEF ET PROCÉDÉ DE REFROIDISSEMENT D'UNE TURBINE BASSE PRESSION DANS UNE TURBOMACHINE**
TURBOMASCHINE SOWIE VERFAHREN ZUR KÜHLUNG EINER NIEDERDRUCKTURBINE EINER TURBOMASCHINE
TURBOMACHINE AND METHOD OF COOLING A LOW PRESSURE TURBINE OF A TURBOMACHINE

(30) Priorité: 16.10.2017 FR 1759692
(43) Date de publication de la demande: 26.08.2020
(73) Titulaire: Safran Aircraft Engines, 75015 Paris (FR)
(72) Inventeur: EKRA DEVALERE, Yolande, Chantal, Ohouan, 77550 Moissy-Cramayel (FR); BERNAVA, Daniel, 77550 Moissy-Cramayel (FR); SAUVE, Michael, Alain, Eric, 77550 Moissy-Cramayel (FR)
(74) Mandataire: Cabinet Beau de Loménie
(86) Numéro de dépôt international: PCT/FR2018/052559
(87) Numéro de publication internationale: WO 2019/077251

(56) Documents cités:
- EP-A1- 0 637 683
- EP-A1- 2 305 982
- US-A1- 2009 104 020

## Description

### Arrière-plan de l'invention

L'invention concerne le domaine des turbomachines. Plus précisément, l'invention concerne le refroidissement d'une turbine basse pression dans une turbomachine d'aéronef.

Il est courant dans une turbomachine de prélever de l'air sur un compresseur haute pression pour refroidir des pièces dans des étages présentant un environnement plus chaud. L'air de refroidissement prélevé sur le compresseur haute pression est par exemple acheminé vers les turbines haute pression et basse pression de la turbomachine. L'air acheminé permet alors la purge de l'air chaud et la ventilation des pièces d'attaches (ex : disques, aubes mobiles) de ces turbines. Un tel refroidissement, comme décrit dans le document EP 2 305 982, permet ainsi de se prémunir de tout risque de surchauffe des pièces mobiles des turbines, pouvant aboutir dans le pire des cas à une rupture de ces pièces.

En vue de garantir la conformité des dispositifs de refroidissement aux normes aéronautiques, il est par ailleurs courant de sur-dimensionner ces dispositifs.

A titre d'exemple, même si trois canaux de circulation d'air prélevant de l'air sur le compresseur haute pression apparaissent comme suffisants pour refroidir la turbine basse pression, un quatrième canal de circulation d'air vers la turbine sera systématiquement mis en oeuvre. La réalisation de ce canal supplémentaire permet de garantir que le débit d'air prélevé sur le compresseur haute pression demeure suffisant en cas de rupture d'un canal. Un tel surdimensionnement permet ainsi d'assurer que toute défaillance d'un canal de circulation d'air demeure sans effet et n'affecte pas la sécurité du vol de l'aéronef.

Bien que fiable, un tel surdimensionnement conduit à prélever plus d'air que réellement nécessaire sur le compresseur haute pression dans une situation nominale de fonctionnement de la turbomachine, par exemple en l'absence de défaillance d'un canal de circulation d'air. Un tel sur-prélèvement d'air impacte de manière non négligeable la consommation spécifique en carburant (SFC) de l'aéronef.

Il est donc souhaitable d'améliorer les performances de la turbomachine, notamment de limiter l'impact des systèmes de refroidissement sur la consommation en carburant de l'aéronef.

### Objet et résumé de l'invention

La présente invention a pour but de remédier aux inconvénients précités et s'affranchir, notamment, des surdimensionnements des systèmes de refroidissement.

A cet effet, l'invention propose une turbomachine d'aéronef comprenant au moins :
- un compresseur haute pression,
- une turbine haute pression,
- une turbine basse pression,
- un premier canal de circulation d'air de refroidissement mettant en communication le compresseur haute pression et la turbine haute pression,
- un deuxième canal de circulation d'air de refroidissement mettant en communication le compresseur haute pression et la turbine basse pression,
le premier canal étant muni d'une vanne, la turbomachine comportant en outre un troisième canal de circulation d'air de refroidissement en communication sélective avec le premier canal par l'intermédiaire de la vanne, le troisième canal étant en outre en communication avec la turbine basse pression, la vanne présentant une première configuration dans laquelle la circulation d'air dans le premier canal est autorisée et la circulation d'air dans le troisième canal est interdite, et une deuxième configuration dans laquelle la circulation d'air provenant du premier canal est déviée vers le troisième canal.

Avantageusement, il devient ainsi possible de s'affranchir de tout surdimensionnement pour le refroidissement de la turbine basse pression. Alors qu'habituellement un dispositif de refroidissement d'une turbine basse pression nécessite un canal de circulation d'air supplémentaire pour garantir un bon refroidissement de la turbine, un nombre minimal de canaux pour refroidir la turbine basse pression est ici utilisé. En d'autres termes, la turbine basse pression est refroidie au juste besoin par le deuxième canal. Lors d'un fonctionnement nominal de la turbomachine, l'air prélevé sur le compresseur haute pression peut être à la fois acheminé vers la turbine basse pression par le deuxième canal en vue de son refroidissement au juste besoin et, à titre d'exemple, vers un dispositif d'optimisation des performances de la turbomachine par le premier canal. La consommation spécifique de carburant de la turbomachine est donc optimisée dans des conditions nominales de fonctionnement, ces conditions correspondant à la première configuration de la vanne.

Si une défaillance survient dans la turbomachine, par exemple une rupture du deuxième conduit, l'air de refroidissement initialement dédié au dispositif d'optimisation des performances de la turbomachine est dévié vers la turbine basse pression de manière à garantir un bon refroidissement de celle-ci. Ainsi, les performances de la turbomachine en fonctionnement nominal, c'est-à-dire en l'absence de défaillance, se voient optimisées, notamment en termes de consommation spécifique de carburant.

Selon l'invention, la turbomachine comprend un dispositif de contrôle configuré pour déterminer une pression d'air de refroidissement de la turbine basse pression et commander en fonction de la pression d'air déterminée la vanne pour la faire passer de la première configuration à la deuxième configuration.

Dans un exemple de réalisation, une extrémité du deuxième canal et une extrémité du troisième canal sont connectées à un collecteur d'air de refroidissement, le collecteur d'air de refroidissement étant en outre connecté à un distributeur creux de la turbine basse pression.

Dans un exemple de réalisation, la turbomachine comprend une pluralité de deuxièmes canaux de circulation d'air de refroidissement mettant chacun en communication le compresseur haute pression et la turbine basse pression.

Dans un exemple de réalisation, le dispositif de contrôle est configuré pour déterminer la pression d'air de refroidissement de la turbine basse pression à partir d'au moins une mesure d'un capteur de pression associé au collecteur d'air de refroidissement.

Dans un autre exemple de réalisation, le dispositif de contrôle est configuré pour déterminer la valeur de pression d'air de refroidissement de la turbine basse pression à partir d'au moins une mesure d'un capteur de pression disposé dans une enceinte de la turbine basse pression.

Dans un autre exemple de réalisation, le dispositif de contrôle est configuré pour déterminer la pression d'air de refroidissement de la turbine basse pression à partir d'une différence de mesures de pression de capteurs de pression associés à la pluralité de deuxièmes canaux.

Dans un exemple de réalisation, la turbomachine comprend en outre un dispositif de pilotage d'un jeu entre des sommets d'aubes d'un rotor de la turbine haute pression et un anneau de turbine d'un carter entourant les aubes de la turbine haute pression, une extrémité du premier canal de circulation d'air de refroidissement étant en communication avec le dispositif de pilotage de jeu de la turbine haute pression de manière à l'alimenter en air lorsque la vanne est dans la première configuration.

Dans un exemple de réalisation, le dispositif de pilotage du jeu de la turbine haute pression est un dispositif interne à l'anneau de turbine.

L'invention propose également, selon un autre aspect, un procédé de refroidissement d'une turbine basse pression dans une turbomachine d'aéronef réalisée comme résumé ci-dessus, ce procédé comprenant :
- un prélèvement d'air circulant dans le compresseur haute pression,
- dans une situation initiale correspondant à la première configuration de la vanne, une distribution de l'air prélevé à la turbine haute pression par l'intermédiaire du premier canal et à la turbine basse pression par l'intermédiaire du deuxième canal,
- la détermination d'une pression d'air de refroidissement de la turbine basse pression et une comparaison de la valeur de la pression déterminée à un seuil par le dispositif de contrôle, et
- lorsque la pression d'air de refroidissement de la turbine basse pression est inférieure au seuil, la commande par le dispositif de contrôle de la vanne selon la deuxième configuration, de manière à distribuer l'air de refroidissement du premier canal à la turbine basse pression.

Dans un exemple de réalisation de ce procédé, le seuil est prédéterminé en fonction d'une condition de défaillance du deuxième canal.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue en coupe longitudinale d'une turbomachine équipée d'un dispositif de refroidissement selon l'invention,
- la figure 2 est une vue en coupe longitudinale et partielle d'une turbine basse pression dans une turbomachine selon l'invention.

### Description détaillée de modes de réalisation

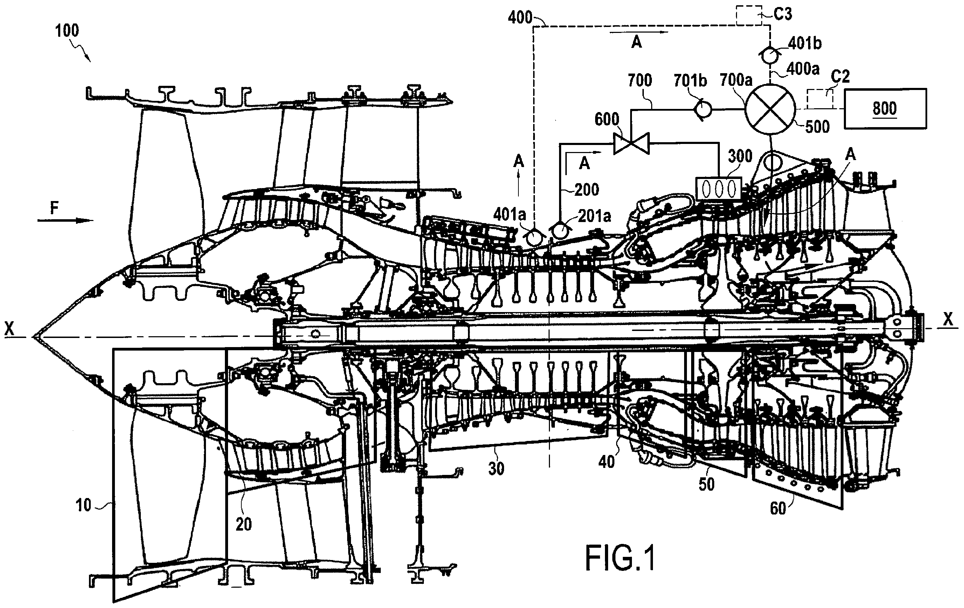

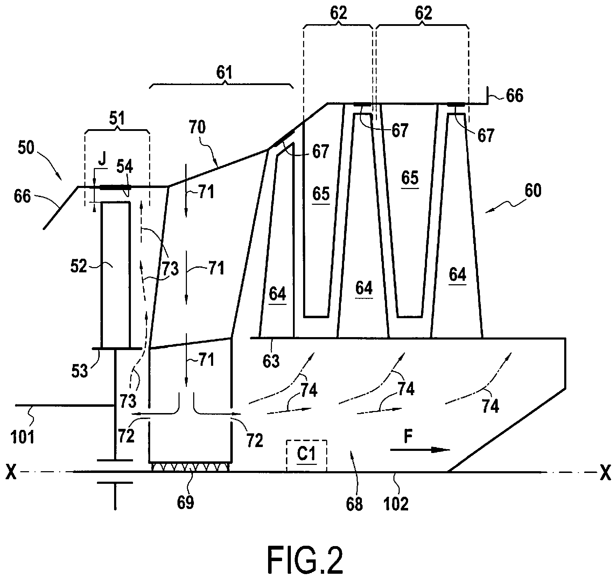

Les termes « amont » et « aval » sont par la suite définis par rapport au sens d'écoulement des gaz au travers une turbomachine, indiqué par la flèche F sur les figures 1 et 2.

La figure 1 illustre une turbomachine 100 à double flux comprenant de manière connue d'amont en aval successivement au moins une soufflante 10, une partie moteur comprenant successivement au moins un étage de compresseur basse pression 20, de compresseur haute pression 30, une chambre de combustion 40, au moins un étage de turbine haute pression 50 et de turbine basse pression 60.

Des rotors, tournant autour de l'axe principal X de la turbomachine 100 et pouvant être couplés entre eux par différents systèmes de transmission et d'engrenages, correspondent à ces différents éléments.

De manière connue, de l'air A est prélevé sur le compresseur haute pression 30 en vue de refroidir des zones plus chaudes de la turbomachine 100, notamment les turbines haute pression 50 et basse pression 60.

La figure 2 est un agrandissement d'une zone de la turbomachine 100, illustrant de manière simplifiée la partie aval de la turbine haute pression 50 et amont de la turbine basse pression 60.

La partie aval de la turbine haute pression 50 ici représentée illustre un étage 51 comprenant au moins une aube mobile 52 assemblée sur un disque 53 mobile solidaire en rotation d'un arbre haute pression 101.

La turbine basse pression 60 ici illustrée comprend une pluralité d'étages 61, 62 de turbine. Un premier étage 61, ainsi que les étages 62 situés en aval de celui-ci comprennent respectivement un ensemble de distributeurs fixes 70 et 65. Chaque étage 61, 62 comprend en outre un disque 63 mobile sur lequel est monté un ensemble d'aubes 64 entraînées en rotation par le disque 63 mobile. Le premier étage 61 de la turbine basse pression 60 comprend au moins une aube 64 mobile, ainsi qu'au moins un distributeur 70 creux, dans lequel circule de l'air de refroidissement. Dans l'exemple illustré sur la figure 2, le distributeur 70 forme une seule pièce avec un carter 66 constitutif de cette turbine et est creux pour laisser passer en son intérieur de l'air de refroidissement, sortant par l'intermédiaire d'injecteurs 72 associés au distributeur 70. Les étages 62 suivants, situés en aval de la turbine basse pression 60, comprennent chacun au moins une aube 64 mobile et un distributeur 65 se présentant sous la forme d'un aubage fixe. Le disque 63 mobile est solidaire en rotation d'un arbre basse pression 102 s'étendant selon l'axe X-X, tandis que chaque stator 65 est relié au carter 66. Chaque étage 61, 62 de turbine comprend en outre un anneau de turbine 67 situé en regard des aubes 64 mobiles, et qui est solidaire du carter 66. De même, l'étage 51 de la turbine haute pression 50 comprend un carter, ici le carter 66, qui entoure les aubes 52 mobiles (rotors) de la turbine haute pression 50 et comprend un anneau (abradable) de turbine 54 situé en regard des aubes 52.

Les aubes 52, 64, les stators 65 et les anneaux de turbine 54, 67 sont en matériau CMC. Le carter 66 et le distributeur 70 sont quant à eux en un matériau présentant un coefficient de dilatation thermique strictement supérieur à celui du matériau CMC, par exemple en un matériau métallique. Les disques 53, 63 mobiles sont en un matériau métallique.

Conformément à l'invention, la turbine basse pression 60 comprend un dispositif de refroidissement permettant d'acheminer l'air A prélevé sur le compresseur haute pression 30. Cet air A est acheminé au travers le distributeur 70 creux et est distribuée via les injecteurs 72 dans la turbine basse pression 60. Dans l'exemple illustré, les injecteurs 72 débouchent en aval de l'étage 51 de la turbine haute pression 50 et en amont du premier étage 61 de la turbine basse pression 60. L'air A circule (flèches 71) donc au travers le distributeur 70 creux et est dirigé via les injecteurs 72 vers les disques 53, 63 des turbines haute pression 50 et basse pression 60. L'air distribué permet ainsi de refroidir les disques 53, 63 de ces turbines et purger l'air chaud vers l'extérieur du carter 66 (flèches 73, 74), limitant ainsi tout risque de surchauffe des rotors des turbines haute pression 50 et basse pression 60.

L'air A prélevé sur le compresseur haute pression 30 est notamment destiné à alimenter en air un ou plusieurs dispositifs contrôlant les performances de la turbomachine 100, à ventiler les étages 61, 62 de la turbine basse pression 60 et purger l'air chaud des étages 51, 61, 62 des turbines haute pression 50 et basse pression 60.

Ainsi, de manière connue, au moins un premier canal 200 de circulation d'air de refroidissement prélève de l'air sur le compresseur haute pression 30. L'air prélevé peut ensuite être acheminé vers au moins un dispositif contrôlant les performances de la turbomachine 100.

Ce dispositif est à titre d'exemple un dispositif de pilotage d'un jeu entre, d'une part, les sommets des aubes 52, 64 du rotor des turbines haute pression 50 ou basse pression 60 et, d'autre part, les anneaux de turbine 54, 67 du carter 66 entourant ces aubes 52, 64. Ainsi, dans l'exemple illustré, le premier canal 200 achemine, dans une configuration nominale, l'air A prélevé sur le compresseur haute pression 30 vers un dispositif 300 de pilotage de jeu J de la turbine haute pression 50. Un tel dispositif 300 est couramment connu de l'homme du métier sous la dénomination HPTACC (*« High Pressure Turbine Active Clearance Control* »)*.*

Dans un autre exemple non-illustré, le premier canal 200, ou un autre canal, peut acheminer l'air A prélevé vers un dispositif de contrôle de jeu de la turbine basse pression 60, c'est à dire vers un dispositif LPTACC (« *Low Pressure Turbine Active Clearance* »)*.*

Toujours de manière connue, au moins un deuxième canal 400 de circulation d'air de refroidissement prélève de l'air sur le compresseur haute pression 30 pour purger l'air chaud des étages 51, 61, 62 des turbines haute pression 50 et basse pression 60, et refroidir la turbine basse pression 60. Une extrémité 400a de chaque deuxième canal 400 est connectée en tant qu'entrée d'air à un collecteur 500 d'air de refroidissement. La sortie du collecteur 500 d'air de refroidissement est connectée au distributeur 70 creux de la turbine basse pression 60.

Conformément à l'invention, le nombre de deuxièmes canaux 400 destinés à acheminer l'air prélevé sur le compresseur haute pression 30 vers la turbine basse pression 60 est choisi pour répondre au juste besoin de refroidissement de la turbine. En d'autres termes, le nombre de canaux 400 n'est pas surdimensionné et correspond au nombre minimal de canaux nécessaires à la ventilation des disques 63 de la turbine basse pression 60.

Dans l'exemple illustré sur la figure 1, un seul canal 400 prélève de l'air destiné au seul refroidissement en air de la turbine basse pression 60 dans des conditions nominales, c'est-à-dire en l'absence de défaillance de ce canal 400. Un unique canal de prélèvement d'air A est donc ici suffisant pour refroidir la turbine basse pression 60 dans des conditions nominales. Cependant, dans d'autres exemples non-illustrés, la turbine basse pression 60 peut être refroidie à l'aide d'une pluralité de canaux 400. Le nombre des canaux 400 est alors choisi de manière à répondre au juste besoin de refroidissement de la turbine basse pression 60, c'est-à-dire choisi pour acheminer le débit d'air minimum nécessaire au refroidissement de la turbine basse pression 60 et assurer un refroidissement uniforme sur toute la circonférence des pièces.

Le premier canal 200 est en outre muni d'une vanne 600 autorisant la connexion d'un troisième canal 700 de circulation d'air de refroidissement. Une entrée d'air du troisième canal 700 est connectée à la vanne 600 et est en communication sélective avec le premier canal 200 par l'intermédiaire de celle-ci. Une extrémité 700a, correspondant à une sortie en air du troisième canal 700 est connectée en tant qu'entrée d'air au collecteur 500 d'air de refroidissement.

La vanne 600 peut être commandée selon deux configurations à partir d'un dispositif de contrôle 800. Dans une première configuration, correspondant à une configuration par défaut de la vanne 600, la vanne 600 autorise la circulation d'air prélevé uniquement dans le premier canal 200. Dans cette première configuration, la circulation d'air à travers le troisième canal 700 est interdite par la vanne 600. Dans une deuxième configuration, la vanne 600 est commandée par le dispositif de contrôle 800 de manière à dévier la circulation d'air provenant du premier canal 200 vers le troisième canal 700, autorisant la circulation d'air dans ce dernier.

Le dispositif de contrôle 800 commande la configuration de la vanne 600 en fonction d'une pression d'air de refroidissement déterminée pour la turbine basse pression 60. Cette pression d'air de refroidissement est déterminée par le dispositif de contrôle 800 à partir de mesures issues d'au moins un capteur C1, C2, C3 de données.

Dans un premier exemple, illustré sur la figure 2, le capteur C1 de données est un capteur de pression disposé dans une enceinte 68 de la turbine basse pression 60. Cette disposition du capteur C1 permet de mesurer à tout instant la pression dans l'enceinte 68, et de détecter une éventuelle chute de pression, pouvant à titre d'exemple résulter d'une défaillance d'un joint labyrinthe 69 assurant l'isolation en pression de l'enceinte 68, ou encore d'une rupture d'un canal de circulation d'air. Ainsi, si le dispositif de contrôle 800 détecte une chute de pression dans l'enceinte 68, celui-ci peut commander le passage de la vanne 600 de la première configuration à la deuxième configuration. L'air A prélevé sur le compresseur haute pression 30 et circulant dans le premier canal 200 est alors dévié vers le troisième canal 700 par l'intermédiaire de la vanne 600. Cette deuxième configuration permet ainsi de garantir un débit d'air de refroidissement suffisant pour le refroidissement de la turbine basse pression 60, ainsi que pour la purge en air chaud des étages 51, 61, 62 des turbines haute pression 50 et basse pression 60. Le débit d'air dévié constitue donc un complément à l'air de refroidissement acheminé par le ou les deuxièmes canaux 400 dans le cas d'une rupture du joint labyrinthe 69, ou un débit d'air remplaçant celui du deuxième canal 400 en cas de rupture de ce dernier.

Dans un deuxième exemple illustré sur la figure 1, le capteur C2 de données est un capteur de pression associé au collecteur 500 d'air de refroidissement. Le capteur C2 permet de mesurer à tout instant la pression dans le collecteur 500, et permettre la détection d'une éventuelle chute de pression, traduisant une défaillance du deuxième canal 400. Ainsi, si le dispositif de contrôle 800 détecte une chute de pression dans le collecteur 500 d'air de refroidissement, celui-ci peut commander le passage de la vanne 600 de la première configuration à la deuxième configuration. L'air prélevé sur le compresseur haute pression 30 et circulant dans le premier canal 200 est dévié par la vanne 600 de manière à circuler dans le troisième canal 700. Cette deuxième configuration permet alors, via la déviation de l'air de refroidissement circulant dans le premier canal 200, de fournir un débit d'air suffisant pour refroidir la turbine basse pression 60 et assurer la purge de l'air chaud des étages 51, 61, 62 des turbines haute pression 50 et basse pression 60 malgré la défaillance du deuxième canal 400.

Dans un troisième exemple, lorsque la turbomachine 100 présente une pluralité de deuxièmes canaux 400, la défaillance d'un canal peut être identifiée par le dispositif de contrôle 800 sur la base d'une différence de pression mesurée entre les différents canaux 400. Chaque deuxième canal 400 est alors instrumenté par un capteur C3 de pression. Une fois encore, lorsque le dispositif de contrôle 800 détecte une chute de pression, correspondant à une défaillance d'un des canaux 400, le dispositif commande le passage de la vanne 600 depuis la première configuration vers la deuxième configuration. Ainsi, la déviation par la vanne 600 de l'air circulant dans le premier canal 200 vers le troisième canal 700 permet de compenser la perte de l'air de refroidissement due à la défaillance d'un des deuxièmes canaux 400.

Par ailleurs, il est entendu que la défaillance (ex : rupture) d'un canal de circulation d'air peut être détectée par d'autres moyens que des capteurs de pression, par exemple par détection de courants ou de vibrations.

Plus généralement, le refroidissement de la turbine basse pression 60, ainsi que la purge des étages 51, 61, 62 sont réalisés comme suit.

Pour un fonctionnement nominal de la turbomachine 100, par exemple en l'absence de défaillance du joint labyrinthe 69 ou d'un canal 400 de circulation d'air de refroidissement, la vanne 600 est initialement dans la première configuration. De l'air A circulant dans la turbomachine 100 est prélevé sur le compresseur haute pression 30. L'air prélevé est ensuite acheminé à la fois par le premier canal 200 vers un dispositif d'optimisation des performances de la turbomachine, par exemple vers le dispositif 300 de pilotage de jeu J de la turbine haute pression 50, et vers la turbine basse pression 60 par l'intermédiaire du ou des deuxième canaux 400 en vue de refroidir celle-ci.

Parallèlement, le dispositif de contrôle 800 détermine la pression d'air de refroidissement de la turbine basse pression 60, à partir de mesures d'un ou plusieurs capteurs C1, C2, C3 de données, et compare la pression déterminée à un seuil. Ce seuil est, à titre d'exemple, prédéterminé en fonction d'une condition de défaillance d'un deuxième canal 400 et/ou d'une défaillance d'un joint d'isolation de l'enceinte 68 de la turbine basse pression 60.

Lorsque la pression d'air de refroidissement de la turbine basse pression 60 est identifiée par le dispositif de contrôle 800 comme inférieure audit seuil, le dispositif de contrôle 800 déduit une défaillance risquant d'impacter le bon refroidissement de la turbine basse pression 60. Le dispositif de contrôle 800 commande alors la vanne 600 pour passer depuis la première configuration à la deuxième configuration. L'air de refroidissement du premier canal 200 est alors dévié vers le troisième canal 700 de manière à distribuer cet air de refroidissement à la turbine basse pression 60.

Préférentiellement, le premier canal 200 est un canal distribuant de l'air au dispositif 300 de pilotage de jeu J de la turbine haute pression 50 lorsque la turbomachine 100 fonctionne de manière nominale, c'est à dire dans la première configuration de la vanne 600.

Toujours préférentiellement, le dispositif 300 de pilotage est un dispositif interne à l'anneau de turbine 54 de la turbine haute pression 50.

Ces configurations préférentielles présentent pour avantage de fournir des débits d'air de refroidissement maximisés circulant dans le premier canal 200. Ainsi, lorsque la vanne 600 est commandée dans la deuxième configuration, le refroidissement de la turbine basse pression 60 ainsi que la purge de l'air chaud des étages 51, 61, 62 des turbines haute pression 50 et basse pression 60 se voient maximisés. D'autres configurations sont cependant envisageables, par exemple la connexion du premier canal 200 au dispositif de contrôle de jeu de la turbine basse pression 60, ou encore l'utilisation d'un dispositif de contrôle de jeu externe à la turbine haute pression 50.

Par ailleurs, comme illustré sur la figure 1, des diaphragmes 201a, 401a peuvent être disposés aux entrées respectives du premier canal 200 et du/des deuxièmes canaux 400. Des clapets anti-retours 401b, 701b sont alors disposés aux sorties respectives du ou des deuxièmes canaux 400 et du troisième canal 700. Les diaphragmes 201a, 401a et clapets anti-retours 401b, 701b ont pour fonction de minimiser les effets sur le prélèvement d'air du compresseur haute pression 30 en cas de défaillance d'un des canaux 200, 400, 700. Le risque de pertes d'air de refroidissement s'en voit ainsi limité. Ainsi, en cas de rupture d'un canal, il n'est pas nécessaire de détecter le canal endommagé, celui-ci étant automatiquement isolé par son diaphragme et clapet respectif.

Avantageusement, les modes de réalisation décrits ci-dessus permettent de s'affranchir de tout surdimensionnement pour refroidir la turbine basse pression 60. Alors qu'habituellement un refroidissement de la turbine basse pression nécessite un canal de circulation d'air supplémentaire pour garantir un bon refroidissement de la turbine et être en conformité avec les normes de sécurité aéronautiques, les modes de réalisation décrits-ci-dessus ne nécessitent que le nombre minimum de canaux requis pour refroidir cette turbine. En d'autres termes, la turbine basse pression 60 est ici refroidie au juste besoin par le ou les deuxièmes canaux 400.

Au cours d'un fonctionnement nominal de la turbomachine 100, l'air prélevé sur le compresseur haute pression 30 peut être à la fois acheminé vers la turbine basse pression 60, en vue de son refroidissement au juste besoin et, à titre d'exemple, vers le dispositif 300 de pilotage de jeu de la turbine haute pression 50. La consommation spécifique de carburant de la turbomachine 100 est donc optimisée dans des conditions nominales de fonctionnement, ces conditions correspondant à la première configuration de la vanne 600.

Si une défaillance survient dans la turbomachine 100, par exemple une rupture d'un deuxième conduit 200 ou d'un joint labyrinthe 69, l'air de refroidissement initialement dédié, à titre d'exemple, au dispositif 300 de pilotage de jeu de la turbine haute pression 50 est dévié vers la turbine basse pression 60 de manière à garantir un bon refroidissement de celle-ci. Dans cette situation, correspondant à la deuxième configuration de la vanne 600, les performances globales de la turbomachine 100 se voient dégradées au profit du refroidissement de la turbine basse pression 60. Néanmoins, une telle diminution des performances de la turbomachine 100 demeure peu fréquente, car n'est commandée uniquement qu'en cas de défaillance détectée dans celle-ci. A l'inverse, les surdimensionnements des circuits de refroidissement de l'état de l'art impliquent des sur-prélèvements d'air sur le compresseur haute pression durant l'ensemble du fonctionnement nominal de la turbomachine. Ces sur-prélèvements conduisent alors à une dégradation des performances globales de la turbomachine en l'absence de défaillance dans celle-ci.

Les modes de réalisations proposés permettent ainsi l'obtention d'une fonctionnalité de secours performante pour le refroidissement de la turbine basse pression 60 et la purge des étages 51, 61, 62 des turbines haute pression 50 et basse pression 60. Cette fonctionnalité de refroidissement répond par ailleurs toujours parfaitement aux exigences de sécurité aéronautiques.

Sur la base de ces modes de réalisation, il a été évalué, pour toutes phases de fonctionnement de la turbomachine 100, qu'il est possible d'obtenir un gain en débit massique de carburant W25 en entrée du compresseur haute pression 30 de l'ordre de 0.25% et un gain de 15% en consommation spécifique de carburant.

## Revendications

1. Turbomachine (100) d'aéronef comprenant au moins :
- un compresseur haute pression (30),
- une turbine haute pression (50),
- une turbine basse pression (60),
- un premier canal (200) de circulation d'air de refroidissement mettant en communication le compresseur haute pression (30) et la turbine haute pression (50),
- un deuxième canal (400) de circulation d'air de refroidissement mettant en communication le compresseur haute pression (30) et la turbine basse pression (60),
- la turbomachine (100) étant **caractérisée en ce que** le premier canal (200) est muni d'une vanne (600), et **en ce qu'**elle comporte en outre un troisième canal (700) de circulation d'air de refroidissement en communication sélective avec le premier canal (200) par l'intermédiaire de la vanne (600), le troisième canal (700) étant en outre en communication avec la turbine basse pression (60), la vanne (600) présentant une première configuration dans laquelle la circulation d'air dans le premier canal (200) est autorisée et la circulation d'air dans le troisième canal (700) est interdite, et une deuxième configuration dans laquelle la circulation d'air provenant du premier canal (200) est déviée vers le troisième canal (700),
- la vanne étant dans la deuxième configuration lorsque la pression d'air de refroidissement de la turbine basse pression est inférieure à un seuil,
et **en ce que** la turbomachine comprend en outre un dispositif de contrôle (800) configuré pour déterminer une pression d'air de refroidissement de la turbine basse pression (60) et commander en fonction de la pression d'air déterminée la vanne (600) pour la faire passer de la première configuration à la deuxième configuration.

2. Turbomachine (100) selon la revendication 1, dans laquelle une extrémité (400a) du deuxième canal (400) et une extrémité (700a) du troisième canal (700) sont connectées à un collecteur (500) d'air de refroidissement, le collecteur (500) d'air de refroidissement étant en outre connecté à un distributeur (70) creux de la turbine basse pression (60).

3. Turbomachine (100) selon les revendications 1 ou 2, comprenant une pluralité de deuxièmes canaux (400) de circulation d'air de refroidissement mettant chacun en communication le compresseur haute pression (30) et la turbine basse pression (60).

4. Turbomachine (100) selon les revendications 2 ou 3, dans laquelle le dispositif de contrôle (800) est configuré pour déterminer la pression d'air de refroidissement de la turbine basse pression (60) à partir d'au moins une mesure d'un capteur (C2) de pression associé au collecteur (500) d'air de refroidissement.

5. Turbomachine (100) selon les revendications 2 ou 3, dans laquelle le dispositif de contrôle (800) est configuré pour déterminer la valeur de pression d'air de refroidissement de la turbine basse pression (60) à partir d'au moins une mesure d'un capteur (C1) de pression disposé dans une enceinte (68) de la turbine basse pression (60).

6. Turbomachine (100) selon la revendication 3, dans laquelle le dispositif de contrôle (800) est configuré pour déterminer la pression d'air de refroidissement de la turbine basse pression (60) à partir d'une différence de mesures de pression de capteurs (C3) de pression associés à la pluralité de deuxièmes canaux (400).

7. Turbomachine (100) selon l'une quelconque des revendications 1 à 6, comprenant en outre un dispositif (300) de pilotage d'un jeu (J) entre des sommets d'aubes (52) d'un rotor de la turbine haute pression (50) et un anneau de turbine (54) d'un carter (66) entourant les aubes (52) de la turbine haute pression (50), une extrémité du premier canal (200) de circulation d'air de refroidissement étant en communication avec le dispositif (300) de pilotage de jeu de la turbine haute pression (50) de manière à l'alimenter en air lorsque la vanne (600) est dans la première configuration.

8. Turbomachine (100) selon la revendication 7, dans laquelle le dispositif (300) de pilotage du jeu de la turbine haute pression (50) est un dispositif interne à l'anneau de turbine (54).

9. Procédé de refroidissement d'une turbine basse pression (60) dans une turbomachine (100) d'aéronef réalisée selon l'une quelconque des revendications 1 à 8, ce procédé comprenant :
- un prélèvement d'air circulant dans le compresseur haute pression (30),
- dans une situation initiale correspondant à la première configuration de la vanne (600), une distribution de l'air prélevé à la turbine haute pression (50) par l'intermédiaire du premier canal (200) et à la turbine basse pression (60) par l'intermédiaire du deuxième canal (400),
- la détermination d'une pression d'air de refroidissement de la turbine basse pression (60) et une comparaison de la valeur de la pression déterminée à un seuil par le dispositif de contrôle (800), et
- lorsque la pression d'air de refroidissement de la turbine basse pression (60) est inférieure au seuil, la commande par le dispositif de contrôle (800) de la vanne (600) selon la deuxième configuration, de manière à distribuer l'air de refroidissement du premier canal (200) à la turbine basse pression (60).

10. Procédé de refroidissement selon la revendication 9, dans lequel le seuil est prédéterminé en fonction d'une condition de défaillance du deuxième canal (400).

## Patentansprüche

1. Flugzeug-Turbomaschine (100), die mindestens umfasst:
- einen Hochdruckkompressor (30),
- eine Hochdruckturbine (50),
- eine Niederdruckturbine (60),
- einen ersten Kühlluft-Zirkulationskanal (200), der den Hochdruckkompressor (30) und die Hochdruckturbine (50) in Kommunikation versetzt,
- einen zweiten Kühlluft-Zirkulationskanal (400), der den Hochdruckkompressor (30) und die Niederdruckturbine (60) in Kommunikation versetzt,
- wobei die Turbomaschine (100) **dadurch gekennzeichnet ist, dass** der erste Kanal (200) mit einem Ventil (600) ausgestattet ist und dass sie ferner einen dritten Kühlluft-Zirkulationskanal (700) in selektiver Kommunikation mit dem ersten Kanal (200) über das Ventil (600) aufweist, wobei der dritte Kanal (700) ferner in Kommunikation mit der Niederdruckturbine (60) ist, wobei das Ventil (600) eine erste Konfiguration aufweist, in der die Luftzirkulation im ersten Kanal (200) gestattet und die Luftzirkulation im dritten Kanal (700) untersagt ist, und eine zweite Konfiguration, in der die Luftzirkulation, die vom ersten Kanal (200) kommt, zum dritten Kanal (700) umgeleitet wird,
- wobei das Ventil in der zweiten Konfiguration ist, wenn der Kühlluftdruck der Niederdruckturbine kleiner als ein Grenzwert ist,
und dass die Turbomaschine ferner eine Kontrollvorrichtung (800) umfasst, die dazu ausgelegt ist, einen Kühlluftdruck der Niederdruckturbine (60) zu bestimmen und in Abhängigkeit vom bestimmten Luftdruck das Ventil (600) zu steuern, damit es aus der ersten Konfiguration in die zweite Konfiguration wechselt.

2. Turbomaschine (100) nach Anspruch 1, wobei ein Ende (400a) des zweiten Kanals (400) und ein Ende (700a) des dritten Kanals (700) an einen Kühlluftsammler (500) angeschlossen sind, wobei der Kühlluftsammler (500) ferner an einen hohlen Verteiler (70) der Niederdruckturbine (60) angeschlossen ist.

3. Turbomaschine (100) nach den Ansprüchen 1 oder 2, umfassend eine Vielzahl zweiter Kühlluftzirkulationskanäle (400), von denen jeder den Hochdruckkompressor (30) und die Niederdruckturbine (60) in Kommunikation versetzt.

4. Turbomaschine (100) nach den Ansprüchen 2 oder 3, wobei die Kontrollvorrichtung (800) dazu ausgelegt ist, den Kühlluftdruck der Niederdruckturbine (60) ausgehend von mindestens einer Messung eines Drucksensors (C2), der dem Kühlluftsammler (500) zugeordnet ist, zu bestimmen.

5. Turbomaschine (100) nach den Ansprüchen 2 oder 3, wobei die Kontrollvorrichtung (800) dazu ausgelegt ist, den Kühlluftdruckwert der Niederdruckturbine (60) ausgehend von mindestens einer Messung eines Drucksensors (C1) zu bestimmen, der in einem Behälter (68) der Niederdruckturbine (60) angeordnet ist.

6. Turbomaschine (100) nach Anspruch 3, wobei die Kontrollvorrichtung (800) dazu ausgelegt ist, den Kühlluftdruck der Niederdruckturbine (60) ausgehend von einer Differenz von Druckmessungen von Drucksensoren (C3) zu bestimmen, die der Vielzahl zweiter Kanäle (400) zugeordnet sind.

7. Turbomaschine (100) nach einem der Ansprüche 1 bis 6, umfassend ferner eine Steuervorrichtung (300) eines Spiels (J) zwischen den Spitzen von Schaufeln (52) eines Rotors der Hochdruckturbine (50) und einem Turbinenring (54) eines Gehäuses (66) um die Schaufeln (52) der Hochdruckturbine (50), wobei ein Ende des ersten Kühlluft-Zirkulationskanals (200) mit der Spielsteuervorrichtung (300) der Hochdruckturbine (50) derart in Kommunikation ist, dass sie mit Luft versorgt wird, wenn das Ventil (600) in der ersten Konfiguration ist.

8. Turbomaschine (100) nach Anspruch 7, wobei die Spielsteuervorrichtung (300) der Hochdruckturbine (50) eine innere Vorrichtung des Turbinenrings (54) ist.

9. Verfahren zur Kühlung einer Niederdruckturbine (60) in einer Flugzeug-Turbomaschine (100) nach einem der Ansprüche 1 bis 8, wobei dieses Verfahren umfasst:
- eine Entnahme von Luft, die im Hochdruckkompressor (30) zirkuliert,
- in einer Ausgangssituation, die der ersten Konfiguration des Ventils (600) entspricht, eine Verteilung der Luft, die der Hochdruckturbine (50) entnommen wurde, über den ersten Kanal (200), und der Niederdruckturbine (60) über den zweiten Kanal (400),
- die Bestimmung eines Kühlluftdrucks der Niederdruckturbine (60) und einen Vergleich des bestimmten Druckwerts mit einem Grenzwert durch die Kontrollvorrichtung (800), und
- wenn der Kühlluftdruck der Niederdruckturbine (60) unter dem Grenzwert liegt, die Steuerung des Ventils (600) durch die Kontrollvorrichtung (800) gemäß der zweiten Konfiguration derart, dass die Kühlluft vom ersten Kanal (200) zur Niederdruckturbine (60) verteilt wird.

10. Kühlverfahren nach Anspruch 9, wobei der Grenzwert in Abhängigkeit von einer Störungsbedingungen des zweiten Kanals (400) vorbestimmt ist.

## Claims

1. An aircraft turbomachine (100) comprising at least:
- one high-pressure compressor (30),
- one high-pressure turbine (50),
- one low-pressure turbine (60),
- one first cooling air circulation channel (200) putting into communication the high-pressure compressor (30) and the high-pressure turbine (50),
- one second cooling air circulation channel (400) putting into communication the high-pressure compressor (30) and the low-pressure turbine (60),
- the turbomachine (100) being **characterized in that** the first channel (200) is equipped with a valve (600), and **in that** it also includes a third cooling air circulation channel (700) in selective communication with the first channel (200) by means of the valve (600), the third channel (700) also being in communication with the low-pressure turbine (60), the valve (600) having a first configuration in which air circulation in the first channel (200) is allowed and air circulation in the third channel (700) is prohibited, and a second configuration in which air circulation originating in the first channel (200) is diverted to the third channel (700),
and **in that** the turbomachine also comprises a control device (800) configured to determine a cooling air pressure of the low-pressure turbine (60) and command the valve (600) depending on the determined air pressure to cause it to transition from the first configuration to the second configuration.

2. The turbomachine (100) according to claim 1, wherein one end (400a) of the second channel (400) and one end (700a) of the third channel (700) are connected to a cooling air collector (500), the cooling air collector (500) also being connected to a hollow nozzle (70) of the low-pressure turbine (60).

3. The turbomachine (100) according to claims 1 or 2, comprising a plurality of second cooling air circulation channels (400), each putting into communication the high-pressure compressor (30) and the low-pressure turbine (60).

4. The turbomachine (100) according to claim 2 or 3, wherein the control device (800) is configured to determine the cooling air pressure of the low-pressure turbine (60) based on at least one measurement of a pressure sensor (C2) associated with the cooling air collector (500).

5. The turbomachine (100) according to claim 2 or 3, wherein the control device (800) is configured to determine the value of the cooling air pressure of the low-pressure turbine (60) based on at least one measurement of a pressure sensor (C1) positioned in an enclosure (68) of the low-pressure turbine (60).

6. The turbomachine (100) according to claim 3, wherein the control device (800) is configured to determine the cooling air pressure of the low-pressure turbine (60) based on a difference of pressure measurements of pressure sensors (C3) associated with the plurality of second channels (400).

7. The turbomachine (100) according to any one of claims 1 to 6, also comprising a device (300) for controlling a clearance (J) between blade (52) tips of a rotor of the high-pressure turbine (50) and a turbine annulus (54) of a casing (66) surrounding the blades (52) of the high-pressure turbine (50), one end of the first cooling air circulation channel (200) being in communication with the clearance control device (300) of the high-pressure turbine (50) so as to supply it with air when the valve (600) is in the first configuration.

8. The turbomachine (100) according to claim 7, wherein the clearance control device (300) of the high-pressure turbine (50) is an internal device in the turbine annulus (54).

9. A method for cooling a low-pressure turbine (60) in an aircraft turbomachine (100) produced according to any one of claims 1 to 8, this method comprising:
- collecting air circulating in the high-pressure compressor (30),
- in an initial situation corresponding to the first configuration of the valve (600), distributing the air collected to the high-pressure turbine (50) by means of the first channel (200) and to the low-pressure turbine (60) by means of the second channel (400),
- determining a cooling air pressure of the low-pressure turbine (60) and comparing the value of the determined pressure to a threshold by the control device (800), and
- when the cooling air pressure of the low-pressure turbine (60) is lower than the threshold, commanding the valve (600) into the second configuration by the control device (800), so as to distribute the cooling air of the first channel (200) to the low-pressure turbine (60).

10. The cooling method according to claim 9, wherein the threshold is predetermined based on a failure condition of the second channel (400).
